# EUROPEAN PATENT APPLICATION

(11) **EP 4 120 714 A1**
(43) Date of publication of application: **18.01.2023**
(21) Application number: 20925657.7
(22) Date of filing: 25.11.2020
(51) Int. Cl.: H04W 16/10

(54) **SHARED CELL PROCESSING METHOD AND APPARATUS, ELECTRONIC DEVICE, AND READABLE MEDIUM**

(30) Priority: 19.03.2020 CN 202010198863
(71) Applicant: ZTE Corporation, Shenzhen, Guangdong 518057 (CN)
(72) Inventor: FU, Ang, Shenzhen, Guangdong 518057 (CN)
(74) Representative: Savi, Massimiliano
(86) International application number: PCT/CN2020/131507
(87) International publication number: WO 2021/184819

(57) **Abstract**

A shared cell processing method and apparatus, an electronic device, and a readable medium. Said method comprises: acquiring a processing instruction for a logic cell (410), the logic cell being located in a shared cell, and the processing instruction comprising an operator identifier corresponding to the logic cell; and updating, according to the processing instruction, the operator identifier corresponding to the logic cell in an operator identifier information list, and keeping the position of the operator identifier corresponding to the logic cell in the operator identifier information list unchanged (420).

## Description

### TECHNICAL FIELD

The present disclosure relates to the technical field of communication, in particular to a method and device for processing a shared cell, an electronic apparatus, and a readable medium.

### BACKGROUND

In a scenario where a radio access network is shared in such a manner that several cell identifiers are broadcast (e.g., a shared cell in the 5th Generation Mobile Networks (5G) contains several logical cells and these logical cells belong to different operators), the list of operator identifier information in the System Information Block (SIB) of the shared cell contains several operator identifiers, for example, several Public Land Mobile Network (PLMN) identifiers. And these operator identifiers are sequentially arranged in a particular order in the list of operator identifier information. During initial network access, a terminal device will send a request for network access containing an operator identifier and the specific location of the operator identifier in the list of operator identifier information, so that the base station can quickly locate the operator network which the terminal device subscribes and allow the terminal device to access the network as soon as possible.

However, in case that the service of a logical cell is shut down due to reasons such as maintenance and commissioning, failures in system hardware and software, or network transformation, that is, when the logical cell is shut down, the base station will remove the operator identifier corresponding to the logical cell from the list of operator identifier information, resulting in the change of the order in positions of the operator identifier in the list. In that case, it is necessary for each terminal device connected to the shared cell to perform a synchronization to update the position of the identifiers of operators to which those terminal devices subscribe, in the list of operator identifier information. Otherwise, failures in network connection may occur to each terminal device connected to the shared cell. Therefore, it is not possible for each logical cell in the shared cell to shut down or restart independently, which leads to waste of communication resources and poor user experience.

### SUMMARY

Various embodiments of the present disclosure provide a method and device for processing a shared cell, an electronic apparatus, and a readable medium. It is intended to alleviate one of the related technical problems, including the inefficiency of independent shutdown or restart of the terminal devices in a scenario where a radio access network is shared in such a manner that several cell identifiers are broadcast. Such inefficiency would lead to failures in network connection may occur to each terminal device connected to a shared cell, resulting in the waste of communication resources and poor user experience.

According to an aspect of the present disclosure, there is provided a method for processing a shared cell, which includes, acquiring an instruction for processing a logical cell, in which, the logical cell is within the shared cell, and the instruction for processing includes an operator identifier corresponding to the logical cell; and updating the operator identifier corresponding to the logical cell in the list of operator identifier information, according to the instruction for processing, while keeping a position of the operator identifier corresponding to the logical cell unchanged in the list of operator identifier information.

According to another aspect of the present disclosure, there is provided a device for processing a shared cell, for performing the method as described above, and the device includes, an acquisition module, which is configured to acquire an instruction for processing a logical cell; in which, the logical cell is within the shared cell, and the instruction for processing includes an operator identifier corresponding to the logical cell; and an updating module, which is configured to update the operator identifier corresponding to the logical cell in the list of operator identifier information according to the instruction for processing, and to keep a position of the operator identifier corresponding to the logical cell unchanged in the list of operator identifier information.

According to yet another aspect of the present disclosure, there is provided an electronic apparatus, which includes, at least one processor; and a storage device storing at least one program thereon, which when executed by the processor, causes the processor to carry out the method as described above.

According to yet another aspect of the present disclosure, there is provided a computer-readable medium storing a computer program thereon, which when executed by a processor, causes the processor to carry out the method as described above.

### BRIEF DESCRIPTION OF DRAWINGS

The accompanying drawings, as a part of the specification, are intended to provide a further understanding of the present disclosure, and an interpretation to the present disclosure in conjunction with the embodiments of the present disclosure, but shall not be considered as a limitation to the present disclosure. The above and other features and advantages will become more apparent to those having ordinary skills in the art through description of some embodiments in conjunction with the drawings, in which:
FIG. 1 depicts a block diagram showing a next-generation radio access network based on 3GPP standards;
FIG. 2 depicts a schematic diagram showing the networking of operator A and operator B in a shared wireless access network;
FIG. 3 depicts a signaling sequence diagram showing a procedure of initial access of a shared gNB-DU_{A/B} by a user equipment of operator B;
FIG. 4 depicts a flowchart illustrating a method for processing a shared cell according to Embodiment One of the present disclosure;
FIG. 5 depicts a flowchart illustrating a method for processing a shared cell according to Embodiment Two of the present disclosure;
FIG. 6 depicts a schematic diagram showing a device for processing a shared cell according to Embodiment Three of the present disclosure;
FIG. 7 depicts a schematic diagram showing a system for processing a shared cell based on a 5G communication network according to Embodiment Four of the present disclosure;
FIG. 8 depicts a flow chart showing a procedure in which a logical cell, Cell ID_{A} is shut down by the system for processing a shared cell based on the 5G communication network according to Embodiment Four of the present disclosure;
FIG. 9 depicts a flowchart showing a procedure in which the logical cell, Cell ID_{A} is shut down when F1 interface/link fails according to Embodiment Four of the present disclosure;
FIG. 10 depicts a flow chart showing a procedure in which the logical cell, Cell ID_{A} is restarted by the system for processing a shared cell based on the 5G communication network according to Embodiment Four of the present disclosure;
FIG. 11 depicts a schematic diagram showing a system for processing a shared cell based on a 4G communication network according to Embodiment Five of the present disclosure;
FIG. 12 depicts a flow chart showing a procedure in which a logical cell, Cell ID_{B} is shut down by the system for processing a shared cell based on the 4G communication network according to Embodiment Five of the present disclosure; and
FIG. 13 depicts a schematic diagram showing an example electronic apparatus that can implement the method and device for processing a shared cell according to Embodiment Six of the present disclosure.

### DETAILED DESCRIPTION

In order to enable those having ordinary skills in the art to understand the technical scheme of the present disclosure, the method, device, electronic apparatus and computer-readable medium as set forth in the present disclosure will be described in detail below in conjunction with the drawings.

Example embodiments will be described hereinafter with reference to the drawings, but the example embodiments may be embodied in different forms and should not be construed as limitations to the embodiments set forth herein. Instead, these embodiments are provided to enable those having ordinary skills in the art to understand the scope of the present disclosure.

It should be noted that the terms "first" and "second", if used in the description and the drawings are intended to distinguish similar objects, and do not necessarily imply any specific order or sequence. It should be understood that the data used in this way can be interchanged under appropriate circumstances, so that the embodiments described here can be implemented in an order other than those illustrated or described here. In addition, the terms "including" or "having" and any variations thereof are non-exclusive. For example, a process, method, system, product or device that includes a series of steps or units is not necessarily limited to those steps or units that are clearly stated, but may include other steps or units that are not clearly stated or inherent to these processes, methods, products or devices.

Unless otherwise defined, all terms (including technical and scientific terms) used herein have the same meaning as commonly understood by those having ordinary skills in the art to which the present disclosure belongs. It will also be understood that terms such as those defined in commonly used dictionaries should be interpreted as having meanings consistent with their meanings in the related art and the background of the present disclosure, and will not be interpreted as having idealized or overly formal meanings, unless explicitly stated herein.

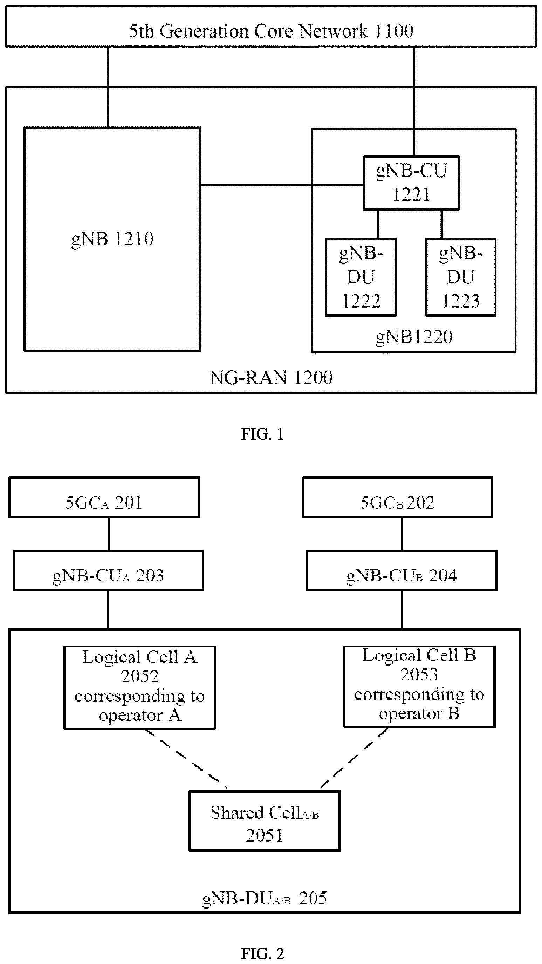

FIG. 1 shows the next generation-radio access network (NG-RAN) 1200 according to the standard TS38.401v15.6.0 of the 3rd generation partnership project (3GPP). The NG-RAN1200 includes several new radio node Bs (gNBs for short) connected to the 5th Generation Core Network (5GC) through the Next Generation (NG) interface, for example, the gNBs include a gNB1210 and a gNB1220). The gNB1210 and the gNB1220 can be interconnected through an Xn control plane (Xn-C for short) interface. The gNB 1220 includes a gNB central unit (gNB-CU) 1221 and several gNB-distributed units (gNB-DU) connected with the gNB-CU 1221 through an F1 interface. For example, in the gNB1220, the gNB-CU 1221 is connected with gNB-DU 1222 and gNB-DU 1223 through an F1 interface, respectively.

In a scenario where the radio access network is shared, several cell identifiers are broadcast and operators have independent F1 interfaces, in that case, one shared gNB-DU entity may connect with several gNB-CUs. FIG. 2 depicts a block diagram showing the networking of operator A and operator B in a shared radio access network, according to an embodiment. The shared gNB distribution unit A/B (gNB-DU_{A/B}) 205 is respectively connected to the gNB centralized unit A (gNB-CU_{A}) 203 and gNB centralized unit B (gNB-CU_{B}) 204 of operator A through an F1 interface. The gNB-CU_{A} 203 is connected to the fifth-generation core network A (5GC_{A}) 201 of operator A through an NG interface, and the gNB-CU_{B} 204 is connected to the fifth-generation core network B (5GC_{B}) 202 of the operator B through an NG interface. A shared cell A/B(NR Cell_{A/B}) 2051 shared by operators A and B is present in the gN-DU_{A/B} 205 entity. The shared cell, NR Cell_{A/B} 2051 includes a logical cell A 2052 corresponding to operator A, and a logical cell B 2053 corresponding to operator B. Sharing of the shared cell, NR Cell_{A/B} 2051 is performed through broadcasting several cell identifiers, that is, the list of operator identifiers in the System Information Block 1 (SIB 1) of the cell contains the operator identifiers and cell identifiers of both operator A and operator B, i.e., PLMN ID_{A}, Cell ID_{A}, and PLMN ID_{B}, Cell ID_{B}. The gNB-DU_{A} containing NR Cell_{A} is connected with gNB-CU_{A} 203 through an F1 interface to form the logical node gNB_{A} of operator A, and the gNB-DU_{B} containing NR Cell_{B} is connected with gNB-CU_{B} 204 through an F1 interface to form the logical node gNB_{B} of operator B.

**Table 1-List 1 of Operator Identifier Information**

| PLMN ID1:{MCC₁, MNC₁} | PLMN ID2:{MCC₁, MNC₂} |
|---|---|
| Cell identifier: Cell ID_{A} | Cell identifier: Cell ID_{B} |

Table 1 is list 1 of operator identifier information in SIB1 of shared cell NR Cell_{A/B}. For convenience of description, other information elements unrelated to this embodiment are omitted from Table 1. Table 1 contains the logical cell identifiers of two shared cells, i.e., Cell ID_{A} and Cell ID_{B}. The operator identifier of the operator to which logical cell NR Cell_{A} belongs is PLMN ID1, and the operator identifier of the operator to which logical cell NR Cell_{B} belongs is PLMN ID2. The operator identity, PLMN ID includes, Mobile Country Code (MCC) and Mobile Network Code (MNC). MCC is a number consisting of 3 digits and MNC is a number consisting of 2 or 3 digits. According to the definition in Recommendation E.212(2016) of the International Telecommunication Union Telecommunication Standardization Sector (ITU-T) of the International Telecommunication Union (ITU), MCC having a value of 999 indicates a private network. It is recommended to set MNC to 99 (when MNC is a number composed of 2 digits) or 999 (when MNC is a number composed of 3 digits) when using the private network for testing or demonstration.

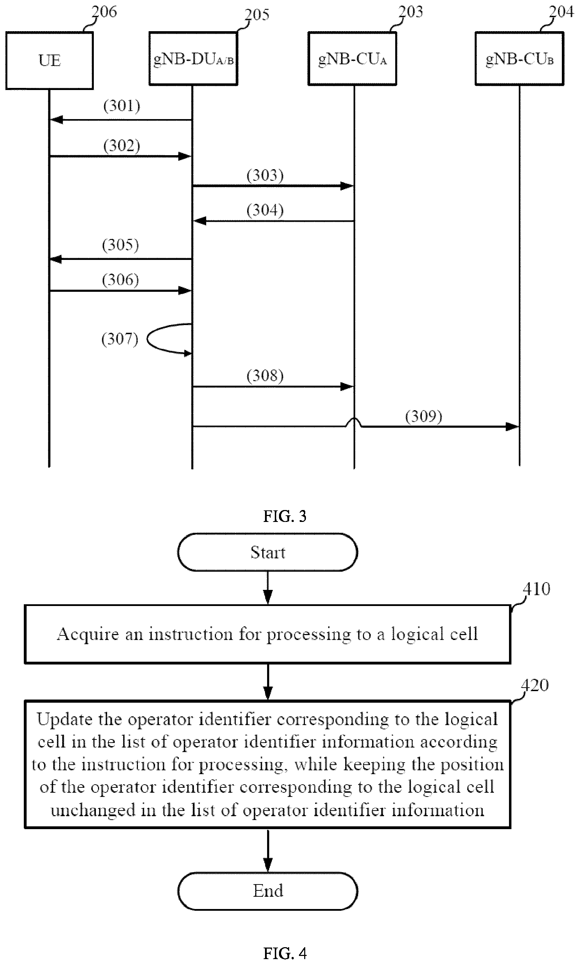

FIG. 3 depicts a signaling sequence diagram showing a procedure of initial access of the shared gNB-DU_{A/B} 205 by a User Equipment (UE)206 of operator B. The procedure may include the following operations.

At S301, a shared cell 205 sends a broadcast message that includes a list of operator identifier information in SIB 1.

It should be noted that the list of operator identifier information includes information about the logical cells corresponding to two operators, and each logical cell contains the PLMN ID of the operator to which the logical cell belongs.

At S302, a UE206 upon successfully receiving the broadcast message sent by the shared cell gNB-DU_{A/B} 205, acquires the list of operator identifier information from SIB 1. The UE206 then sends an RRC setup request message (RRCSetupRequest) to the gNB-DU_{A/B} 205, for accessing the shared cell gNB-DU_{A/B} 205.

It should be noted that the UE206 learns from the list of operator identifier information in SIB1 that, the sharing of the shared cell gNB-DU_{A/B}205 is performed in such a manner that several cell identifiers are broadcast. In particular, PLMN ID_{A} is at the first place in the list, and PLMN ID_{B} is at the second place in the list.

At S303, an uplink initial access request message (F1-Initial UL RRC Message) of the RRC, is sent by the gNB-DU_{A/B} 205 to the gNB-CU_{A} 203.

It should be noted that it is not possible for gNB-DU_{A/B}205 to determine which logical cell provided by the operators is selected by UE206 for the access, that is, the operator identifier, PLMN ID corresponding to the logical cell to be accessed by UE206 is not determined. Therefore, gNB-DU_{A/B} 205 randomly selects the logical cell corresponding to operator A for the access.

At S304, the gNB-CU_{A} 203 responds to the gNB-DU _{A/B} 205 with an RRC uplink transmission message (F1-DL RRC Message Transfer).

At S305, the gNB-DU_{A/B} 205 sends an RRC Setup message (RRCSetup) to the UE206.

At S306, the UE206 sends an RRC Setup Complete message (RRC Setup Complete) to the gNB-DU_{A/B} 205, where the RRC Setup Complete message carries the selected position 1 (the list starts with position 0) of the PLMN ID in the list of operator identifier information in SIB1 by the UE206, that is, the UE206 selects the logical cell corresponding to the operator B for access.

At S307, the gNB-DU_{A/B} 205 learns from the received RRC Setup Complete message that the UE206 selects position 1 of the PLMN ID in the list of operator identifier information in SIB1, and the gNB-DU_{A/B} 205 determines that the UE206 should be connected to the logical cell corresponding to the gNB-CU_{B} 204.

At S308, the gNB-DU_{A/B} 205 sends a context release request message (F1-UE Context Release Request) to the gNB-CU_{A} 203, for releasing the relevant information of the UE206.

At S309, the gNB-DU_{A/B} 205 sends an RRC uplink transmission message (F1-Initial UL RRC Message) to the gNB-DU_{B}204, so as to allow the UE206 to access the logical cell corresponding to the gNB-DU_{B} 204.

It can be seen from the above procedure that in the scenario where the radio access network is shared in such a manner that several cell identities are broadcast, the PLMN IDs contained in the list of operator identifier information in SIB1 of the shared cell gNB-DU_{A/B} 205 is in arranged in a specific order. UE206 helps gNB-DU_{A/B} 205 to decide which logical cell to which this UE206 will connect, by selecting a position in the list of operator identifier information in SIB1. For the 4th generation mobile communication system (4G), in a scenario where a radio access network is shared in such a manner that several cell identifiers are broadcast by a shared cell, the base station based on 4G will also determine which logical cell the terminal will connect to, through the same selection procedure.

However, in case that the service of a logical cell is shut down due to reasons such as maintenance and commissioning, failures in system hardware and software, or network transformation, that is, when the logical cell is shut down, the base station will remove the operator identifier corresponding to the logical cell from the list of operator identifier information , resulting in the change of the order in positions of the operator identifier in the list, and failures in network connection may occur to each terminal device connected to the shared cell.

### EMBODIMENT ONE

This embodiment of the present disclosure provides a method for processing a shared cell, which is performed by a device for processing the shared cell. It is intended to address the inefficiency of independent shutdown or restart of the terminal devices in a scenario where a radio access network is shared in such a manner that several cell identifiers are broadcast. Such inefficiency would lead to failures in network connection may occur to each terminal device connected to a shared cell, resulting in the waste of communication resources and poor user experience.

Some details of the method set forth in this embodiment will be described below. The following description are only for understanding of the scheme, and which may not be necessary for the practice of the scheme.

FIG. 4 depicts a flowchart showing the processing method for a shared cell according to this embodiment, the method may include the following operations.

At S410, an instruction for processing to a logical cell is acquired.

The logical cell is arranged within the shared cell, and the instruction for processing includes the operator identifier corresponding to the logical cell. A shared cell may include several logical cells, and each logical cell has its own independent logical cell identifier. In particular, the instruction for processing may include a shutdown instruction or a restart instruction. For example, the shutdown instruction is needed when the service of a logic cell is temporarily ceased due to maintenance and commissioning, failures in system hardware and software, or when a logic cell is to be permanently removed due to network transformation. And the restart instruction is needed when a logic cell is to be reconnected to the network for service or testing after being shut down for some time.

In some implementations, the instruction for processing is triggered manually or automatically. The automatic triggering of the instruction for processing is performed when the link between network elements/devices fails.

For example, when the interface/link between two network elements/devices is disconnected, both network elements/devices will detect the failure of the interface/link, and automatically trigger the instruction for processing according to the failure to ensure the proper operation of the communication network, and inform the maintenance staff.

At S420, the operator identifier corresponding to the logical cell in the list of operator identifier information is updated according to the instruction for processing, while the position of the operator identifier corresponding to the logical cell is kept unchanged in the list.

The list of operator identifier information is a list provided in the system information block.

It should be noted that when the shared cell NR Cell_{A/B} performs the sharing in such a manner that several cell identifiers are broadcast, it is necessary for the shared cell to maintain the system information that includes the list of operator identifier information in the system information block 1(SIB1). The list of operator identifier information includes the operator identifier corresponding to each logical cell in the shared cell. And the position of the operator identifier corresponding to each logical cell in the list is kept unchanged. Thereby, the UEs served by the serving logical cells are prevented from disconnecting from the network due to any changes in the position of the operator identifiers corresponding to those severing logical cells in the list when a certain logical cell is removed or not serving, thus ensuring the stability of the communication network.

In some implementations, the operator identifier corresponding to the logical cell in the list of operator identifier information is replaced according to the instruction for processing.

Specifically, the list of operator identifier information is looked up according to the cell identifier corresponding to the logical cell, for the position of the operator identifier corresponding to the logical cell to be processed in the list. Then, the operator identifier corresponding to the logical cell in the list is replaced with the operator identifier corresponding to the logical cell in the instruction for processing, and the update of the list is thus completed.

In particular, the instruction for processing may be a shutdown instruction or a restart instruction. In case that the instruction for processing is a shutdown instruction, the operator identifier corresponding to the logical cell is replaced with a preset identifier that is fixed to an operator. In case that the instruction for processing is the restart instruction, the identifier that is fixed to an operator is replaced with the operator identifier corresponding to the logical cell.

For example, the operator identifier corresponding to the private network is utilized as the identifier fixed to an operator. According to recommendations from the ITU-T, the operator identifier corresponding to the private network can be set to a particular number, which number is not any of the operator identifiers specified in the existing networks.

In some implementations, the replacement of the operator identifier corresponding to the logical cell with the preset identifier that is fixed to an operator includes the following operations. The operator identifier includes a mobile country code and a mobile network code, and the preset identifier that is fixed to an operator includes a preset country code identifier and a preset network identifier; Determine the length of the mobile country code and the length of the mobile network code. Replacing the mobile country code corresponding to the logical cell with the preset country code identifier, according to the length of the mobile country code. And replacing the mobile network code corresponding to the logical cell with the preset network identifier, according to the length of the mobile network code.

The shared cell includes several logical cells (for example, according to the definition of TS38.331V15.7.0 standard of 3GPP, there can be at most 12 logical cells in a shared cell), and each logical cell can include several PLMN IDs.

Countries tend to have their special regulations on the range of values for mobile network codes. When the length of the mobile network code is equal to 2, the mobile network code can be denoted by 2 Arabic numerals greater than or equal to 00 and less than or equal to 99. And when the length of the mobile network code is equal to 3, the mobile network code can be denoted by 3 Arabic numerals greater than or equal to 000 and less than or equal to 999. For example, the MNC in China follows the 2-digit specification with a value ranging from [00,..., 99]. The PLMN IDs of China Mobile include {MCC = 460, MNC = 00}, {MCC = 460, MNC = 02}, etc., and the PLMN IDs of China Unicom include {MCC = 460, MNC = 01}. In particular, "460" is the mobile country code for China, and "00"/"01"/"02" is the domestic mobile network code in China.

For example, in the list of operator identifier information in a given SIB1, the operator identifier corresponding to the logical cell that is being shut down is, PLMN ID1={MCC1, MNC1}, PLMN ID2={MCC2, MNC2}, ..., PLMN IDn={MCCn, MNCN}, where n is an integer greater than or equal to 1. In case that the length of MNC is equal to 2, that is, the MNC is a number with 2 digits, during the shutdown of a logical cell, the operator identifier corresponding to the logical cell can be replaced by PLMN ID1={MCC:999, MNC:99}, PLMN ID2={MCC:999, MNC:98}, ......, PLMN IDn={MCC:999, MNC:99-n+1}, where n is an integer greater than or equal to 1 and greater than or equal to 99. In case that the length of MNC is equal to 3, that is, the MNC is a number with 3 digits, during the shutdown of a logical cell, the operator identifier corresponding to the logical cell can be replaced by PLMN ID1={MCC:999, MNC:999}, PLMN ID2={MCC:999, MNC:998}, ......, PLMN IDn={MCC:999, MNC:999-n+1}, where n is an integer greater than or equal to 1 and greater than or equal to 999.

Correspondingly, during the restart of the logic cell as described above, a simple reverse replacement is required merely. For example, during the restart of the logical cell, it is only necessary to successively replace the operator identifiers of the logical cell with the operator identifiers in SIB1 for replacement during the shutdown of the logical cell, that is, respectively replacing PLMN ID1={MCC:999, MNC:99}, PLMN ID2={MCC:999, MNC:98}, ......, PLMN IDn = {MCC:999, MNC:99-n+1}, with PLMN ID1={MCC1, MNC1}, PLMN ID2={MCC2, MNC2}, ......, PLMN IDn={MCCn, MNCn}.

In some implementations, before S420 is performed, the user terminals connected to the logical cell are to be released, if the instruction for processing is a shutdown instruction.

It should be noted that, when the instruction for processing is a shutdown instruction, each user terminal device connected to the logical cell shall be released before the logical cell is shut down, so that these user terminal devices can select other logical cells for connection in advance. Thereby, the continuity of services of the user terminal devices is ensured and the user experience is improved.

In this embodiment, the operator identifier corresponding to the logical cell in the list of operator identifier information is updated, according to the acquired instruction for processing, while the position of the operator identifier corresponding to the logical cell is kept unchanged in the list. Thereby, the logical cell can be processed independently without affecting the proper communication of the other logical cells within the shared cell, thus ensuring the service quality of UEs served by the other logical cells, avoiding the waste of communication resources to a large extent, and improving the user experience.

### EMBODIMENT TWO

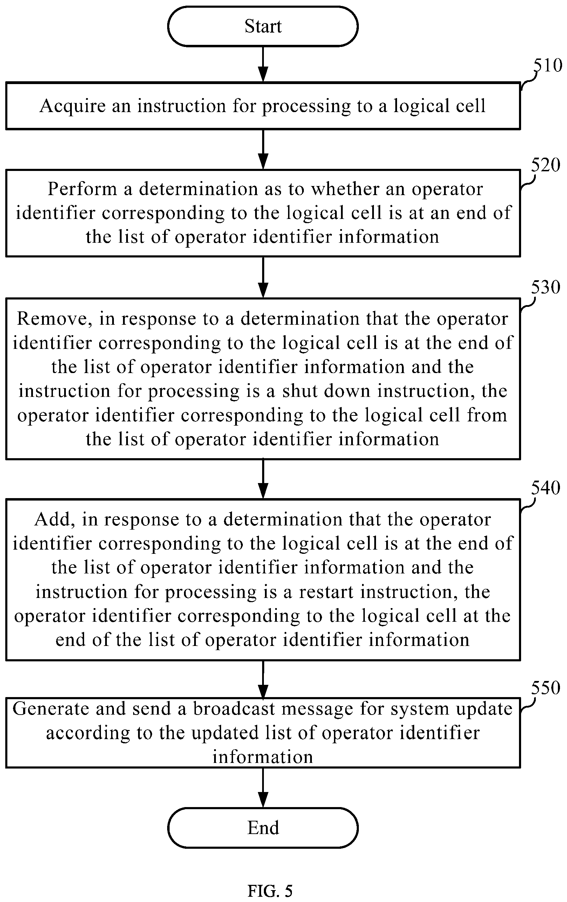

FIG. 5 depicts a flowchart showing a method for processing a shared cell according to this embodiment, which is performed by a device for processing a shared cell. Embodiment two is similar to Embodiment One, the difference lies substantially in that, the position of the operator identifier of the logical cell in the list of operator identifier information is determined, so that the operator identifier of the logical cell can be updated more quickly, while keeping the position of the operator identifier corresponding to the logical cell in the list unchanged.

The method may include the following operations.

At S510, an instruction for processing to a logical cell is acquired.

It should be noted that the operation of S510 in this embodiment is identical to that of S410 in Embodiment one, and which will not be repeated here.

At S520, a determination is performed as to whether an operator identifier corresponding to the logical cell is at an end of the list of operator identifier information.

In order to keep the position of the operator identifier corresponding to the logical cell unchanged in the list of operator identifier information, it is necessary to know the position of the operator identifier corresponding to the logical cell in the list, and process the operator identifier corresponding to the logical cell according to the position and the instruction for processing. For example, when the operator identifier corresponding to the logical cell is not at the end of the list, it is necessary to find out the position of the operator identifier corresponding to the logical cell in the list, and then update the operator identifier at that position, such that shutdown or restart of the logical cell can be done.

At S530, in response to a determination that the operator identifier corresponding to the logical cell is at the end of the list of operator identifier information and the instruction for processing is a shutdown instruction, removing the operator identifier corresponding to the logical cell from the list.

It should be noted that, since the operator identifier corresponding to the logical cell is at the end of the list of operator identifier information, during the shutdown of the logical cell, it is only necessary to remove the operator identifier corresponding to the logical cell from the list, to keep the position of the operator identifier corresponding to the logical cell unchanged in the list.

At S540, in response to a determination that the operator identifier corresponding to the logical cell is at the end of the list of operator identifier information and the instruction for processing is a restart instruction, adding the operator identifier corresponding to the logical cell at the end of the list.

It should be noted that, since the operator identifier corresponding to the logical cell is at the end of the list of operator identifier information, during the restart of the logical cell, it is only necessary to add the operator identifier corresponding to the logical cell at the end of the list to keep the position of the operator identifier corresponding to the logical cell unchanged in the list.

In some implementations, once S530 or S540 is performed, the method further includes modifying the status of the logical cell.

Specifically, once S530 is performed, the status of the logical cell will be set to "shut down". And once S540 is performed, the status of the logical cell will be set to "in service", which means that the communication service of the logical cell has been recovered.

At S550, a broadcast message for system update is generated and sent according to the updated list of operator identifier information.

It should be noted that when a terminal device connected to the shared cell receives the broadcast message for system update, the terminal device will analyze the broadcast message to obtain the updated list of operator identifier information stored in SIB1, and then gets to know which logical cell has been updated to ensure the proper communication.

In this embodiment, after the instruction for processing to the logical cell is acquired, the operator identifier corresponding to the logical cell in the list of operator identifier information can be quickly updated by determining whether the operator identifier is at the end of the list and the type of the instruction for processing, such as the shutdown instruction or the restart instruction. As such, the position of the operator identifier corresponding to the logical cell is kept unchanged in the list of operator identifier information, the network of the user terminal devices served by the other logical cells within the shared cell is avoided, thus ensuring the continuity of communication and the security of communication network, and improving the user experience.

The processes of the above methods are divided only for clarity of description, and can be combined into one single process or some processes can be divided into several processes, any process in which identical logical relationship to the present disclosure is included shall be within the scope of the present disclosure. The algorithm or process with any minor modifications or insignificant designs which do not change the core design of the algorithm and process, shall be within the scope of the present disclosure.

### EMBODIMENT THREE

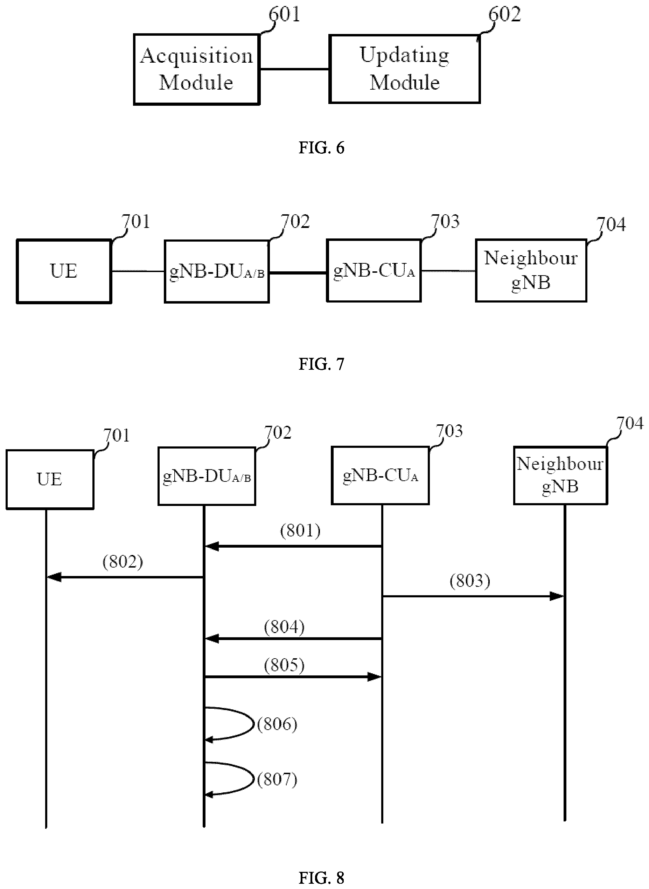

FIG. 6 depicts a schematic diagram showing a device for processing a shared cell according to an embodiment of the present disclosure. For the implementation of this device, please refer to the relevant descriptions of Embodiment One or Embodiment Two, and the identical descriptions will not be repeated here. It is worth noting that the implementation of the device in this embodiment is not limited to the above embodiments, and unspecified embodiments may also be within the scope of this device.

As shown in FIG. 6, the device for processing a shared cell includes an acquisition module 601 and an updating module 602. The acquisition module 601 is configured to acquire an instruction for processing a logical cell which is within the shared cell, and the instruction for processing includes an identifier of an operator corresponding to the logical cell. And the updating module 602 is configured to update the operator identifier corresponding to the logical cell in the list of operator identifier information according to the instruction for processing, and keep the position of the operator identifier corresponding to the logical cell unchanged in the list.

In this embodiment, the operator identifier corresponding to the logical cell in the list of operator identifier information is updated by the updating module, according to the acquired instruction for processing by the acquisition module, while the position of the operator identifier corresponding to the logical cell is kept unchanged in the list. Thereby, the logical cell can be processed independently without affecting the proper communication of the other logical cells within the shared cell, thus ensuring the service quality of UEs served by the other logical cells, avoiding the waste of communication resources to a large extent, and improving the user experience.

It is clear that this embodiment is a device embodiment corresponding to Embodiment 1 or Embodiment 2, and this embodiment may be practiced in cooperation with Embodiment 1 or Embodiment 2. The relevant technical details as described in Embodiment One or Embodiment Two can be applied to this embodiment. In order to reduce redundancy, they will not be repeated here. Accordingly, the relevant technical details as described in this embodiment can also be applied to Embodiment one and Embodiment two.

It should be noted that all the modules involved in this embodiment are logic modules. In practical application, a logic unit can be a physical unit, a part of a physical unit or a combination of multiple physical units. In addition, in order to highlight the innovative part of the present disclosure, units that are not closely related to the solution of the technical problems as set forth in the present disclosure are not introduced in this embodiment, but this does not mean that no further unit is included in this embodiment.

### EMBODIMENT FOUR

This embodiment of the present disclosure provides a system for processing a shared cell based on a 5G communication network. FIG. 7 depicts a schematic diagram showing the system for processing a shared cell based on a 5G communication network, and the system includes UE 701, gNB-DU_{A/B} 702 corresponding to the shared cell NR Cell_{A/B}, gNB-CU_{A} 703 corresponding to the logical cell in shared cell NR Cell_{A/B}, and Neighbour gNB 704. Neighbour gNB704 is the gNB corresponding to a neighboring cell of the logical cell.

**Table 2-List 2 of Operator Identifier Information**

| PLMN ID1: {MCC1, MNC1} | PLMN ID2: {MCC1, MNC2} | PLMN ID3: {MCC1, MNC3} |
|---|---|---|
| Cell identifier: Cell ID_{A} | | Cell identifier: Cell ID_{B} |

Table 2 shows a list 2 of operator identifier information in SIB 1 of shared cell NR Cell_{A/B}. List 2 of operator identifier information, stores the operator identifiers of two operators of a certain country, i.e., the identifiers of operators A and B. The shared cell NR Cell_{A/B} broadcasts several cell identifiers, so that the logical cell corresponding to operator A and the logical cell corresponding to operator B can share the resources of NR Cell_{A/B}. Operator A has two operator identifiers, e.g., PLMN ID1 and PLMN ID2, and operator B has one operator identifier, e.g., PLMN ID3. The logical cell of operator A is assigned with a logical cell identifier, Cell ID_{A}, and the logical cell of operator B is assigned with a logical cell identifier, Cell ID_{B}, by NR Cell_{A/B}. The mobile country codes, MCCs of operator A and operator B within the same country are identical, both of which are MCC1, but the mobile network codes, MNCs of those operators are different. In particular, MNC is a number composed of 2 digits.

FIG. 8 depicts a flow chart showing a procedure in which the logical cell, Cell ID_{A} is shut down by the system for processing the shared cell based on the 5G communication network, and the procedure specifically includes the following operations.

At S801, gNB-CU_{A} 703 sends an instruction to gNB-DU_{A/B} 702 to shut down logical cell NR Cell_{A}.

It should be noted that the shutdown instruction may be triggered manually or automatically by gNB-CU_{A} 703. For example, the service of logical cell NR Cell_{A} is temporarily ceased due to maintenance and commissioning, failures in system hardware and software. Alternatively, the logical cell NR Cell_{A} is to be permanently removed due to network reconstruction.

At S802, gNB-CU_{A}703 releases each terminal device connected to the logical cell NR Cell_{A}, including UE701.

Particularly, the gNB-CU_{A} 703 sends a release message to each connected terminal device, such as UE701.

At S803, gNB-CU_{A} 703 sends a notify message which includes information that the logical cell NR Cell_{A} is unavailable, to Neighbour gNB 704.

At S804, gNB-CU_{A} 703 sends a gNB-CU configuration update message (gNB-CU CONFIGURATION UPDATE) to gNB-DU_{A/B} 702, to inform gNB-DU_{A/B}702 that the logical cell NR Cell_{A} is to be shut down.

At S805, after receiving the gNB-CU CONFIGURATION UPDATE, the gNB-DU_{A/B} 702 is informed that the logical cell NR Cell_{A} is to be shut down, and feeds back a gNB-CU configuration update response message (gNB-CU CONFIGURATION UPDATE ACK) to gNB-CU_{A} 703, so as to inform gNB-CU_{A}703 that the shutdown instruction has been sent successfully.

The gNB-DU_{A/B}702 stores the SIB1 with information about the shared cell NR Cell_{A/B}, and the SIB 1 stores list 2 of operator identifier information which is particularly shown in Table 2. At S806, list 2 of the operator identifier information is looked up, according to the cell identifier Cell ID_{A} of the logical cell NR Cell_{A}, for the operator identifier corresponding to the logical cell, i.e., PLMN ID1 and PLMN ID2, and the following update is performed, in which the value of PLMN ID1 is set to {MCC: 999, MNC: 99}, and the value of PLMN ID2 is set to {MCC: 999, MNC: 98}.

It should be noted that the MCC corresponding to the logical cell NR Cell_{A} is replaced with a preset country code identifier (for example, 999), and the MNC corresponding to the logical cell NR Cell_{A} is replaced with a preset network identifier (for example, 99 or 98), while the position of the operator identifier corresponding to the logical cell, NR Cell_{A} is kept unchanged in list 2 of operator identifier information. As such, the operator identifiers corresponding to other logical cells in the shared cell, NR Cell_{A/B} are not to be changed, and the terminal devices corresponding to other logical cells are not to be updated with the corresponding operator identifiers. Thereby, the terminal devices corresponding to the other logical cells will not be disconnected from the network due to the shutdown of logical cell NR Cell_{A}, thus ensuring the stability of the communication network and improving the user experience.

At S807, gNB-DU_{A/B} 702 shuts down the service related to the logical cell NR Cell_{A}, and sets the state of the logical cell, NR Cell_{A} to "shutdown".

In some implementations, when the link between network element devices fails, gNB-DU will automatically trigger the shutdown instruction to shut down the logical cell according to the information of failure as received.

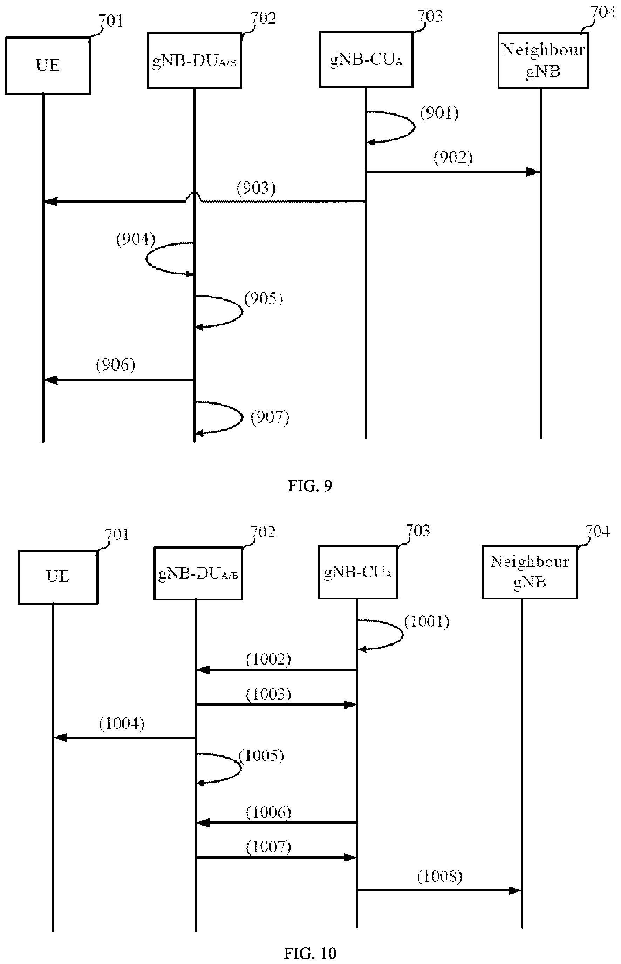

For example, once detecting that the F1 interface/link between gNB-CU_{A}703 and gNB-DU_{A/B} 702 is disconnected, gNB-CU_{A}703 will automatically trigger the shutdown of logical cell NR Cell_{A}. FIG. 9 depicts a flowchart showing a procedure in which the logical cell, Cell ID_{A} is shut down when the F1 interface/link fails, the procedure includes the following operations.

At S901, gNB-CU_{A} 703 detects that the F1 interface/link between gNB-CU_{A} 703 and gNB-DU_{A/B} 702 fails, and automatically triggers a shutdown instruction to shut down the logical cell NR Cell_{A}.

At S902, gNB-CU_{A} 703 sends a notify message which includes information that the logical cell NR Cell_{A} is unavailable, to the Neighbour gNB 704.

At S903, gNB-CU_{A}703 releases each terminal device connected to the logical cell NR Cell_{A}, including UE701.

Particularly, gNB-CU_{A} 703 sends a release message to each connected terminal device, such as UE701.

At S904, while S901 is being performed, gNB-DU_{A/B} 702 also detects that the F1 interface/link between gNB-DU_{A/B} 702 and gNB-CU_{A}703 fails, and automatically triggers the shutdown instruction to shut down the logical cell NR Cell_{A}.

The gNB-DU_{A/B}702 stores the SIB1 with information about the shared cell NR Cell_{A/B}, and the SIB 1 stores list 2 of operator identifier information which is particularly shown in Table 2. At S905, list 2 of the operator identifier information is looked up, according to the cell identifier Cell ID_{A} of the logical cell, NR Cell_{A}, for the operator identifier corresponding to the logical cell, i.e., PLMN ID1 and PLMN ID2, and the following update is performed, in which the value of PLMN ID1 is set to {MCC: 999, MNC: 99}, and the value of PLMN ID2 is set to {MCC: 999, MNC: 98}.

At S906, gNB-DU_{A/B} 702 updates the broadcast for system information of the shared cell, NR Cell_{A/B}, so that each terminal device connected to the shared cell, NR Cell_{A/B} receives the new SIB1.

For example, UE701 will receive the updated list of operator identifier information in the updated SIB1, as shown in Table 3, which includes updated PLMN ID1 and PLMN ID2.

Table 3 shows list 3 of operator identifier information in SIB 1 after the logical cell, NR Cell_{A} is shut down. The value of PLMN ID1 is set to {MCC: 999, MNC: 99}, the value of PLMN ID2 is set to {MCC: 999, MNC: 98}.

**Table 3-List 3 of Operator Identifier Information**

| PLMN ID1: {MCC: 999, MNC: 99} | PLMN ID2: {MCC:999, MNC:98} | PLMN ID3: {MCC1, MNC3} |
|---|---|---|
| Cell identifier: Cell ID_{A} | | Cell identifier: Cell ID_{B} |

At S907, gNB-DUA/B702 shuts down the service related to the logical cell, NR Cell_{A}, and sets the status of the logical cell, NR Cell_{A} to "shut down".

In some cases, the logical cell, Cell ID_{A} will be reconnected or restarted for service after being shut down. FIG. 10 depicts a flow chart showing a procedure in which the logical cell, Cell ID_{A} is reconnected by the system for processing the shared cell based on the 5G communication network and the procedure specifically includes the following operations.

At S1001, gNB-CU_{A}703 decides to restart the logical cell, NR Cell_{A}, and generates a restart instruction.

It should be noted that the restart instruction may be triggered manually or automatically by gNB-CU_{A}703 as per some requirements or some detections. For example, the logic cell NR Cell_{A} which has been shut down, may be restarted as per requirements for maintenance or commissioning, such that some tests can be done.

At S1002, gNB-CU_{A}703 sends a configuration update message (gNB-CU CONFIGURATION UPDATE) to gNB-DU_{A/B}702, in which the gNB-CU CONFIGURATION UPDATE message carries a restart instruction indicating the restart of the logical cell, NR Cell_{A}.

At S1003, after receiving the gNB-CU CONFIGURATION UPDATE, gNB-DU_{A/B}702 is informed that the logical cell NR CellA is to be restarted, and feeds back a configuration update response message (gNB-CU CONFIGURATION UPDATE ACK) to gNB-CU_{A} 703, so that gNB-CU_{A}703 confirms that the restart instruction has been sent successfully.

At S1004, gNB-DU_{A/B}702 stores the SIB1 containing the shared cell NR Cell_{A/B}, and the SIB1 stores the list of operator identifier information as shown in Table 3. The operator identifier corresponding to the logical cell NR Cell_{A} is PLMN ID1:{MCC: 999, MNC: 99}, PLMN ID2:{MCC: 999, MNC: 98}. gNb-DU_{A/B} 702 updates the operator identifier corresponding to the logical cell NR Cell_{A} after being informed that the logical cell NR Cell_{A} is to be restarted. The updated list of operator identifier information is shown in Table 2, that is, PLMN ID1 is set to {MCC1, MNC1}, and PLMN ID2 is set to {MCC1, MNC2}.

It should be noted that the position of the operator identifier corresponding to the logical cell NR Cell_{A} is kept unchanged in the list of operator identifier information. And thus, the restart of the logical cell NR Cell_{A} relates only to the finding of the location of PLMN ID1 and PLMN ID2 and making corresponding updates, while the proper communication of other logical cells in the shared cell NR Cell_{A/B} will not be affected. Thus, ensuring the stability of the communication network and improving the customer experience.

At S1005, gNB-DU_{A/B} 702 starts the service related to the logical cell NR Cell_{A}, and sets the status of the logical cell NR Cell_{A} to "in service".

At S1006, gNB-DU_{A/B} 702 sends a gNB-DU configuration update message (gNB-DU CONFIGURATION UPDATE) carrying an in-service indication, to gNB-CU_{A} 703, and the in-service indication is indicative of logical cell NR CellA being in service.

At S1007, gNB-CU_{A} 703 responds to gNB-DU_{A/B} 702 with a gNB-DU configuration update response message (gNB-DU CONFIGURATION UPDATE ACK), such that gNB-DU_{A/B}702 confirms that gNB-CU_{A} 703 is informed that the logical cell, NR Cell_{A} is in service.

At S1008, the gNB-CU_{A}703 sends a notify message to the Neighbour gNB 704, to inform the Neighbour gNB 704 that the logic cell, NR Cell_{A} has been restarted, and is currently in service for communication.

In this embodiment, through the signaling interaction between gNB-CU_{A} and gNB-DU_{A/B}, the list of operator identifier information in gNB-DU_{A/B} is updated, so that the logic cell can be shut down or restarted independently without changing the position of the operator identifier corresponding to the logic cell in the list, thus avoiding the disconnected from the network of the terminal devices connected to the shared cell, ensuring the stability of the communication network and improving the user experience.

### EMBODIMENT FIVE

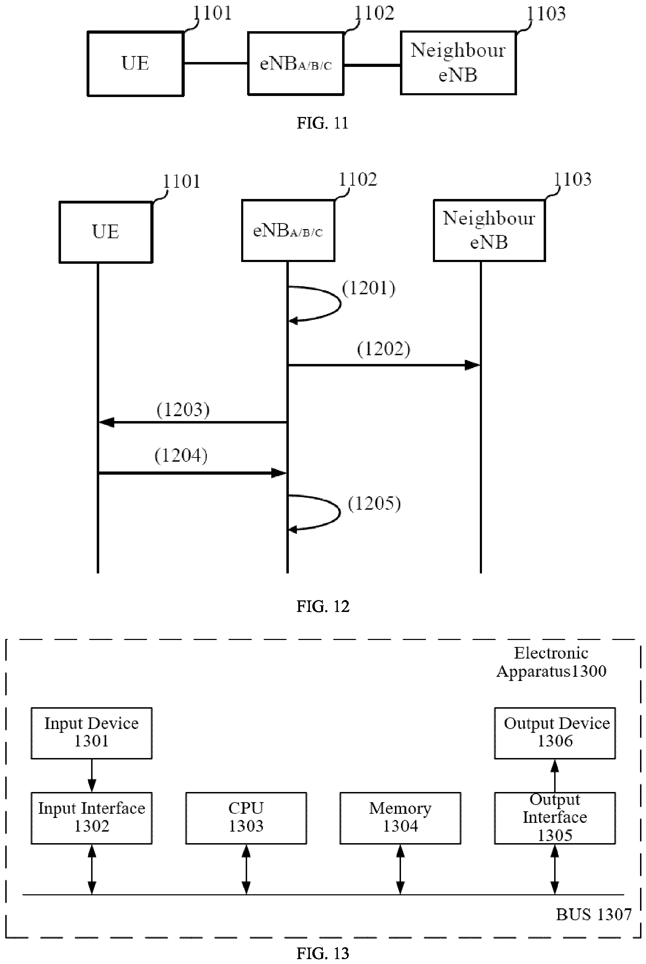

This embodiment of the present disclosure provides a system for processing a shared cell system based on a 4G communication network. FIG. 11 depicts a schematic diagram showing the system for processing a shared cell based on a 4G communication network, and the system includes a UE 1101, an evolution base station (eNB), eNB_{A/B/C} 1102, and a neighbor eNB 1102.

It should be noted that eNB_{A/B/C} 1102 establishes the shared cell, LTE Cell_{A/B/C} in such a manner that several cell identifiers are broadcast. There are three different logical cells in the shared cell, LTE Cell_{A/B/C}, the three logical cells belong to three different operators, for example, operator A, operator B, and operator C, respectively.

**Table 4-List 4 of Operator Identifier Information**

| PLMN ID1: {MCC1, MNC1} | PLMN ID2: {MCC1, MNC2} | PLMN ID3: {MCC1, MNC3} |
|---|---|---|
| Cell identifier: Cell ID_{A} | Cell identifier: Cell ID_{B} | Cell identifier: Cell ID_{C} |

Table 4 shows a list 4 of operator identifier information in SIB1 of the shared cell, LTE Cell_{A/B/C}. As shown in Table 4, logical cell 1 belongs to operator A, and the corresponding logical cell identifier is Cell ID_{A}, and the corresponding operator identifier is PLMN ID1. Logical cell 2 belongs to operator B, the corresponding logical cell identifier is Cell ID_{B}, and the corresponding operator identifier is PLMN ID2. Logical cell 3 belongs to operator C, the corresponding logical cell identifier is Cell ID_{C}, and the corresponding operator identifier is PLMN ID3.

It should be noted that, because the three operators belong to the same country, the MCC values of these operators are all MCC1, but their MNC values are different, in which MNC is a number composed of 3 digits.

FIG. 12 depicts a flow chart showing a procedure in which the logical cell, Cell ID_{B} is shut down by the system for processing the shared cell based on the 4G communication network. The procedure includes the following operations S1201 to S1207.

At S1201, eNB_{A/B/C} 1102 decides to shut down the logical cell LTE Cell_{B}, and generates a shutdown instruction.

It should be noted that the shutdown instruction may be triggered manually or automatically by eNB_{A/B/C}1102_{A} 1102 as per some requirements or some detections. For example, the service of logical cell LTE Cell_{B} is temporarily ceased due to maintenance and commissioning, failures in system hardware and software. Alternatively, the logical cell LTE Cell_{B} is to be permanently removed due to network reconstruction.

At S1202, eNB_{A/B/C} 1102 sends a notify message which includes information that the logical cell LTE Cell_{B} is unavailable, to Neighbour eNB1102.

At S1203, eNB_{A/B/C} 1102 releases each terminal device connected to the logical cell LTE Cell_{B}, including UE1101.

Particularly, eNB_{A/B/C} 1102 sends a release message to each connected terminal device, such as UE1101.

At S1204, eNB_{A/B/C} 1102 updates the operator identifier PLMN ID2 corresponding to the logical cell LTE Cell_{B} in the list of operator identifier information in SIB 1.

Specifically, eNB_{A/B/C} 1102 looks up the list of operator identifier information according to the cell identifier Cell ID_{B} of the logical cell LTE Cell_{B}, acquires the position of the operator identifier PLMN ID2 corresponding to the logical cell LTE Cell_{B} in the list of operator identifier information, and then sets the value of PLMN ID2 to {MCC: 999, MNC: 999}, so as to update the operator identifier PLMN ID2.

At S1205, eNB_{A/B/C}1102 shuts down the service related to the logical cell LTE Cell_{B}, and sets the status of the logical cell LTE Cell_{B} to "shut down".

Table 5 shows list 5 of operator identifier information in SIB1 after the logical cell LTE Cell_{B} is shut down. The value of PLMN ID2 is set to {MCC: 999, MNC: 999}.

**Table 5-List 5 of Operator Identifier Information**

| PLMN ID1: {MCC1, MNC1} | PLMN ID2: {MCC:999, MNC:999} | PLMN ID3: {MCC1, MNC3} |
|---|---|---|
| Cell identifier: Cell ID_{A} | Cell identifier: Cell ID_{B} | Cell identifier: Cell ID_{C} |

In this embodiment, eNB_{A/B/C} decides to shut down the logical cell LTE Cell_{B}, and the operator identifier corresponding to the logical cell LTE Cell_{B} in the list of operator identifier information is updated and the position of the operator identifier corresponding to the logical cell LTE Cell_{B} is kept unchanged in the list. Thereby, the logical cell LTE Cell_{B} can be shut down independently without affecting the proper communication of the other logical cells within the shared cell, thus ensuring the service quality of UEs served by the other logical cells, avoiding the waste of communication resources to a large extent, and improving the user experience.

### EMBODIMENT SIX

This embodiment of the present disclosure provides an electronic apparatus. FIG. 13 depicts a schematic diagram showing an example electronic apparatus that can implement the method and device for processing a shared cell according to some embodiments of the present disclosure.

As shown in FIG. 13, the electronic apparatus 1300 includes an input device 1301, an input interface 1302, a CPU 1303, a memory 1304, an output interface 1305, and an output device 1306. The input interface 1302, the CPU 1303, the memory 1304 and the output interface 1305 are connected to each other through a bus 1307. The input device 1301 and the output device 1306 are connected to the bus 1307 through the input interface 1302 and the output interface 1305, respectively, and further connected to other components of the electronic apparatus 1300.

Specifically, the input device 1301 receives external input information (for example, from a UE) and transmits the input information to the CPU 1303 through the input interface 1302. The CPU 1303 processes the input information based on computer-executable instructions stored in memory 1304 to generate output information, temporarily or permanently stores the output information in memory 1304, and then transmits the output information to the output device 1306 through output interface 1305. The output device 1306 outputs the output information from the computing apparatus 1300 for users.

In an embodiment, the electronic apparatus 1300 as shown in FIG. 13 may be implemented as a network device, which may include, a memory configured to store programs; and a processor configured to execute the programs stored in the memory to perform the method for processing a shared cell as described in any one of above embodiments.

According to the method set forth in this embodiment, the operator identifier corresponding to the logical cell in the list of operator identifier information is updated, according to the acquired instruction for processing, while the position of the operator identifier corresponding to the logical cell is kept unchanged in the list. Thereby, the logical cell can be processed independently without affecting the proper communication of the other logical cells within the shared cell, thus ensuring the service quality of UEs served by the other logical cells, avoiding the waste of communication resources to a large extent, and improving the user experience.

According to the embodiment of the present disclosure, the process described above with reference to the flowchart can be implemented as a computer software program. For example, an embodiment of the present disclosure further provides a computer program product, which includes a computer program tangibly contained in a machine-readable medium, the computer program containing program codes for executing the method shown in the flowchart. In such an embodiment, the computer program may be downloaded from a network and installed and/or installed from a removable storage medium.

It shall be appreciated by a person having ordinary skills in the art that all or some of the steps, functional modules/units in the methods, systems and devices disclosed above can be implemented as software, firmware, hardware and their appropriate combinations. In the hardware implementation, the division between functional modules/units mentioned in the above description does not necessarily correspond to the division of physical components. For example, a physical component may have multiple functions, or a function or step may be performed by several physical components in cooperation. Some or all physical components can be implemented as software executed by a processor, such as a central processing unit, a digital signal processor or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage media includes volatile and nonvolatile, removable and non-removable media implemented in any method or technology for storing information such as computer-readable instructions, data structures, program modules or other data. Computer storage media include but are not limited to RAM, ROM, EEPROM, flash memory or other memory technologies, CD-ROM, digital versatile disks (DVD) or other optical disk storage, magnetic boxes, tapes, magnetic disk storage or other magnetic storage devices, or any other media that can be used to store desired information and can be accessed by computers. Furthermore, it is well known to a person having ordinary skills in the art that communication media usually contain computer-readable instructions, data structures, program modules or other data in modulated data signals such as carrier waves or other transmission mechanisms, and can include any information delivering media.

Example embodiments have been disclosed, and some specific terms are used herein. However, those terms are only intended and should only be interpreted in a general illustrative sense, and are not limiting. In some instances, it is apparent to those having ordinary skills in the art that the features, characteristics and/or elements described in connection with specific embodiments can be used alone or in combination with those described in respect of other embodiments, unless otherwise explicitly noted. Therefore, it will be understood by those having ordinary skills in the art that various changes in form and details can be made without departing from the scope of the present disclosure as set forth in the appended claims.

## Claims

1. A method for processing a shared cell, comprising,
acquiring an instruction for processing a logical cell, wherein, the logical cell is provided within the shared cell, and the instruction for processing includes an operator identifier corresponding to the logical cell; and
updating the operator identifier corresponding to the logical cell in a list of operator identifier information, according to the instruction for processing, while keeping a position of the operator identifier corresponding to the logical cell unchanged in the list of operator identifier information.

2. The method of claim 1, wherein updating the operator identifier corresponding to the logical cell in the list of operator identifier information according to the instruction for processing, comprises,
replacing the operator identifier corresponding to the logical cell in the list of operator identifier information, according to the instruction for processing.

3. The method of claim 2, wherein replacing of the operator identifier corresponding to the logical cell in the list of operator identifier information, according to the instruction for processing, comprises,
in response to the instruction for processing being a shutdown instruction, replacing the operator identifier corresponding to the logical cell with a preset identifier that is fixed to an operator; and
in response to the instruction for processing being a restart instruction, replacing the preset identifier that is fixed to an operator with the operator identifier corresponding to the logical cell.

4. The method of claim 3, wherein,
the operator identifier comprises a mobile country code and a mobile network code, and the preset identifier that is fixed to an operator comprises a preset country code identifier and a preset network identifier; and
the replacing of the operator identifier corresponding to the logical cell with a preset identifier that is fixed to an operator, comprises,
determining a length of the mobile country code and a length of the mobile network code;
replacing the mobile country code corresponding to the logical cell with the preset country code identifier, according to the length of the mobile country code; and
replacing the mobile network code corresponding to the logical cell with the preset network identifier, according to the length of the mobile network code.

5. The method of any one of claim 1 to claim 4, wherein the instruction for processing is triggered manually or automatically.

6. The method of claim 5, wherein the instruction for processing is automatically triggered in response to a failure of a link between network elements.

7. The method of claim 3, wherein prior to the updating of the operator identifier corresponding to the logical cell in the list of operator identifier information according to the instruction for processing, the method further comprises,
in response to a determination that the instruction for processing is the shutdown instruction, releasing each user terminal device connected to the logic cell.

8. The method of any one of claim 1 to claim 4, wherein subsequent to the updating of the operator identifier corresponding to the logical cell in the list of operator identifier information according to the instruction for processing, the method further comprises,
generating and sending a broadcast message for system update according to the updated list of operator identifier information, so as to allow each terminal device connected to the shared cell to acquire the updated list of operator identifier information.

9. The method of any one of claim 1 to claim 4, wherein subsequent to the updating of the operator identifier corresponding to the logical cell in the list of operator identifier information according to the instruction for processing, the method further comprises,
modifying a status of the logical cell.

10. A device for processing a shared cell, for performing the method of any one of claim 1 to claim 9, the device comprising,
an acquisition module, configured to acquire an instruction for processing a logical cell; wherein, the logical cell is provided within the shared cell, and the instruction for processing comprises an operator identifier corresponding to the logical cell; and
an updating module, configured to update the operator identifier corresponding to the logical cell in the list of operator identifier information according to the instruction for processing, and to keep a position of the operator identifier corresponding to the logical cell unchanged in the list of operator identifier information.

11. An electronic apparatus, comprising,
at least one processor; and
a storage device storing at least one program thereon, which when executed by the processor, causes the processor to carry out the method of any one of claim 1 to claim 9.

12. A computer-readable medium storing a computer program thereon, which when executed by a processor, causes the processor to carry out the method of any one of claim 1 to claim 9.
